# EUROPEAN PATENT APPLICATION

(11) **EP 4 741 269 A1**
(43) Date of publication of application: **13.05.2026**
(21) Application number: 25209555.9
(22) Date of filing: 17.10.2025
(51) Int. Cl.: B62M 1/10, B62M 9/10, F16F 15/121, F16F 15/129, F16H 55/30

(54) **BYCICLE POWER TRANSMISSION DEVICE**

(30) Priority: 06.11.2024 JP 2024194362
(71) Applicant: Exedy Corporation, Neyagawa-shi, Osaka 572-8570 (JP)
(72) Inventor: HARIMA, Kenji, Osaka, 572-8570 (JP); OHSHIMA, Hiroshi, Osaka, 572-8570 (JP)
(74) Representative: KASTEL Patentanwälte PartG mbB

(57) **Abstract**

It is intended to enhance comfortableness in riding a bicycle in which a bicycle power transmission device is installed. The present bicycle power transmission device includes a first rotor, a second rotor, a friction member, and an elastic member. The second rotor is disposed to be rotatable relative to the first rotor. The friction member is disposed between the first rotor and the second rotor. The friction member is disposed to be rotatable relative to the first rotor. The friction member is configured to be rotated unitarily with the second rotor. The elastic member elastically couples the first rotor and the second rotor therethrough to each other. The friction member includes a base portion, a pawl portion, and a protruding portion. The base portion has an annular shape. The pawl portion extends from the base portion to a first side in an axial direction. The protruding portion is disposed radially inside the pawl portion. The protruding portion protrudes from the base portion to the first side in the axial direction. The second rotor includes an engaging hole and an engaging recess. The engaging hole causes the pawl portion to be engaged therewith. The engaging recess causes the protruding portion to be engaged therewith.

## Description

### CROSS-REFERENCE TO RELATED APPLICATIONS

**This** application is based on and claims the priority benefit of Japanese application No. 2024-194362 filed on November 6, 2024, the contents of which are incorporated herein by reference.

### TECHNICAL FIELD

**The** present invention relates to a bicycle power transmission device.

### BACKGROUND

**A** bicycle power transmission includes a first rotor and a second rotor (e.g., Japan Laid-open Patent Application Publication No. 2024-084007). The first and second rotors are configured to be rotatable relative to each other. The first and second rotors are elastically coupled to each other through coil springs.

When a torque is inputted to the first rotor, the first rotor is rotated relative to the second rotor, whereby the coil springs are compressed. When the torque inputted to the first rotor is reduced in magnitude, the input torque can be compensated by the resilience of the coil springs.

### SUMMARY OF THE INVENTION

It is an object of the present invention to enhance comfortableness in riding a bicycle in which a bicycle power transmission is installed.

**A** bicycle power transmission device according to a first aspect includes a first rotor, a second rotor, a friction member, and an elastic member. The second rotor is disposed to be rotatable relative to the first rotor. The friction member is disposed between the first rotor and the second rotor. The friction member is disposed to be rotatable relative to the first rotor. The friction member is configured to be rotated unitarily with the second rotor. The elastic member elastically couples the first rotor and the second rotor therethrough to each other. The friction member includes a base portion, a pawl portion, and a protruding portion. The base portion has an annular shape. The pawl portion extends from the base portion to a first side in an axial direction. The protruding portion is disposed radially inside the pawl portion. The protruding portion protrudes from the base portion to the first side in the axial direction. The second rotor includes an engaging hole and an engaging recess. The engaging hole causes the pawl portion to be engaged therewith. The engaging recess causes the protruding portion to be engaged therewith.

According to the configuration, when the first and second rotors are rotated relative to each other by the resilience of the elastic member, the friction member is slid against the first rotor; hence, the relative rotation between the first and second rotor can be made smooth. As a result, it is made possible to enhance comfortableness in riding a bicycle in which the present bicycle power transmission device is installed. Besides, the friction member is engaged at the pawl portion thereof with the engaging hole of the second rotor, while being engaged at the protruding portion thereof, disposed radially inside the pawl portion, with the engaging recess of the second rotor. Because of this, attaching the friction member to the second rotor can be made secure, whereby generating a friction torque between the first rotor and the friction member can be made stable. As a result, the relative rotation between the first and second rotors can be made smoother, whereby it is made possible to further enhance comfortableness in riding the bicycle.

**A** bicycle power transmission device according to a second aspect relates to the bicycle power transmission device according to the first aspect and is configured as follows. The friction member includes a plurality of the pawl portions and a plurality of the protruding portions. The plurality of pawl portions and the plurality of protruding portions are alternately disposed in a circumferential direction.

A bicycle power transmission device according to a third aspect relates to the bicycle power transmission device according to the first or second aspect and is configured as follows. The protruding portion overlaps with the elastic member as seen in a radial direction.

A bicycle power transmission device according to a fourth aspect relates to the bicycle power transmission device according to any of the first to third aspects and is configured as follows. The friction member includes a plurality of the pawl portions and an outer wall portion. The plurality of pawl portions are disposed away from each other at intervals in a circumferential direction. The outer wall portion protrudes from the base portion to the first side in the axial direction. The outer wall portion is disposed circumferentially between a pair of pawl portions adjacent to each other in the plurality of pawl portions and extends in the circumferential direction. The outer wall portion includes an inner surface and a recess. The inner surface is oriented radially inward. The recess is provided on the inner surface. The recess recesses radially outward.

A bicycle power transmission device according to a fifth aspect relates to the bicycle power transmission device according to any of the first to fourth aspects and is configured as follows. The friction member includes a plurality of the pawl portions and an outer wall portion. The plurality of pawl portions are disposed away from each other at intervals in a circumferential direction. The outer wall portion protrudes from the base portion to the first side in the axial direction. The outer wall portion is disposed circumferentially between a pair of pawl portions adjacent to each other in the plurality of pawl portions and extends in the circumferential direction. The outer wall portion is disposed away from the pair of pawl portions at intervals in the circumferential direction.

A bicycle power transmission device according to a sixth aspect relates to the bicycle power transmission device according to any of the first to fifth aspects and is configured as follows. The first rotor includes a hub portion and a flange portion. The hub portion extends in the axial direction. The flange portion extends radially outward from the hub portion. The second rotor includes a first plate and a second plate. The first plate is disposed on the first side of the flange portion in the axial direction. The second plate is disposed on a second side of the flange portion in the axial direction. The second plate is configured to be rotated unitarily with the first plate. The friction member is disposed axially between the flange portion and the first plate. The first plate includes the engaging hole and the engaging recess.

A bicycle power transmission device according to a seventh aspect relates to the bicycle power transmission device according to the sixth aspect and further includes a sprocket attached to the first plate.

A bicycle power transmission device according to an eighth aspect relates to the bicycle power transmission device according to any of the first to seventh aspects and is configured as follows. The friction member includes a cylindrical portion. The cylindrical portion protrudes from an inner peripheral end of the base portion to the first side in the axial direction. The protruding portion is disposed radially outside the cylindrical portion. The protruding portion is integrated with the cylindrical portion.

Overall, according to the present invention, it is made possible to enhance comfortableness in riding a bicycle.

### BRIEF DESCRIPTION OF THE DRAWINGS

FIG. 1 is a cross-sectional view of a bicycle power transmission device.
FIG. 2 is a front view of the bicycle power transmission device.
FIG. 3 is a front view of a first rotor.
FIG. 4 is a front view of a first plate.
FIG. 5 is a perspective view of a first friction member.
FIG. 6 is a front view of the first friction member.
FIG. 7 is a front view of the first friction member having attached to the first plate.
FIG. 8 is a side view of a stopper member.

### DETAILED DESCRIPTION

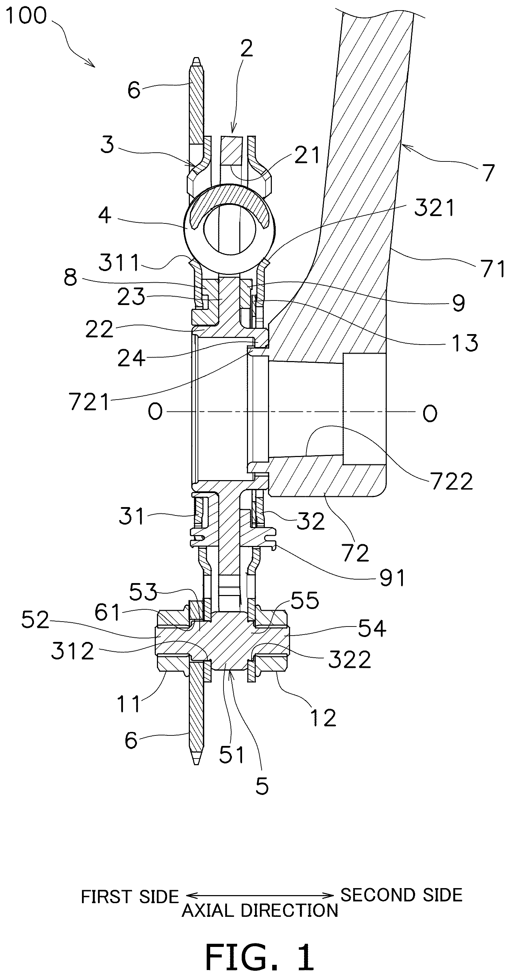

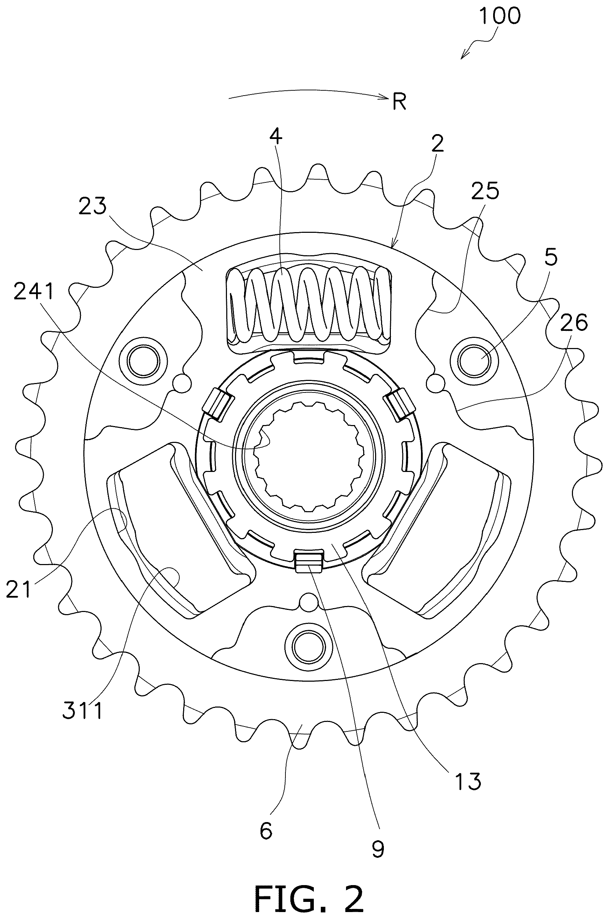

A bicycle power transmission device 100 according to the present preferred embodiment (hereinafter simply referred to as "power transmission device 100" on an as-needed basis) will be hereinafter explained with reference to drawings. It should be noted that in the following explanation, the term "axial direction" refers to an extending direction of a rotational axis O of the power transmission device 100. On the other hand, the term "circumferential direction" refers to a circumferential direction of an imaginary circle about the rotational axis O, whereas the term "radial direction" refers to a radial direction of the imaginary circle about the rotational axis O. The term "first side in the axial direction" indicates the left side in FIG. 1, whereas the term "second side in the axial direction" indicates the right side in FIG. 1. Yet on the other hand, the term "rotational direction R" refers to a direction that the power transmission device 100 is rotated in traveling of a bicycle in which the power transmission device 100 is installed. The rotational direction R indicates the clockwise direction in FIG. 2.

FIG. 1 is a cross-sectional view of the power transmission device 100. As shown in FIG. 1, the power transmission device 100 includes a first rotor 2, a second rotor 3, a plurality of coil springs 4 (exemplary elastic members), a plurality of stopper members 5, a sprocket 6, a crank arm 7, a first friction member 8, a second friction member 9, an urging member 13, a plurality of first nuts 11, and a plurality of second nuts 12. The power transmission device 100 is disposed to be rotatable about the rotational axis O.

The power transmission device 100 is installed in the bicycle. For example, the power transmission device 100 is installed in a type of bicycle without including an electric motor or so forth, i.e., a type of bicycle driven only by a human power. It should be noted that the power transmission device 100 may be installed in another type of bicycle including an electric motor. In this case, for instance, the bicycle may have two modes: an electric mode for driving the bicycle only by the electric motor and a human power mode for driving the bicycle only by the human power. It should be noted that the bicycle may have an assist mode for driving the bicycle by both the electric motor and the human power, or alternatively, may not have the assist mode. The power transmission device 100 is configured to transmit a torque, inputted to a pedal (omitted in illustration) attached to a distal end of the crank arm 7, to a drive wheel (omitted in illustration).

FIG. 2 is a front view of the power transmission device 100 from which some of the coil springs 4, the crank arm 7, and a second plate 32 of the second rotor 3 (to be described) are detached. As shown in FIG. 2, the power transmission device 100 is configured to be rotated in the rotational direction R (clockwise in FIG. 2).

### <First Rotor>

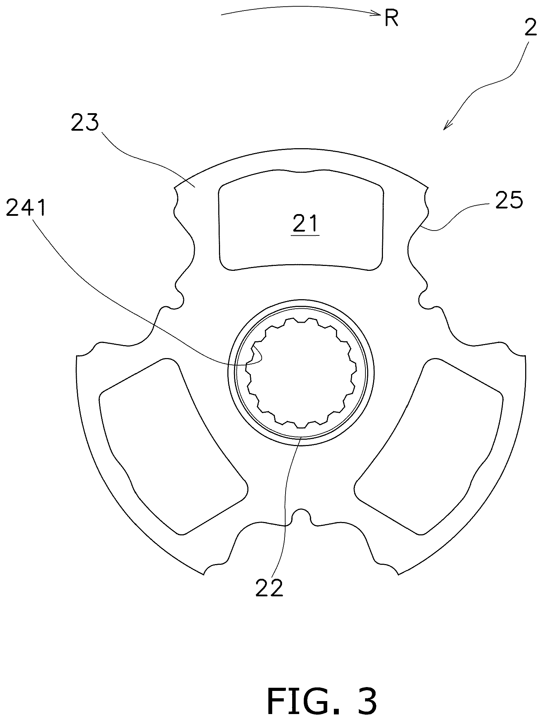

FIG. 3 is a front view of the first rotor 2. As shown in FIG. 3, the first rotor 2 includes a plurality of accommodation holes 21. It should be noted that in the present preferred embodiment, the first rotor 2 includes three accommodation holes 21. The accommodation holes 21 penetrate the first rotor 2 in the axial direction. The accommodation holes 21 are disposed at intervals in the circumferential direction. The accommodation holes 21 are disposed at equal intervals.

The first rotor 2 is disposed to be rotatable in the rotational direction R. The first rotor 2 receives the torque inputted thereto from the crank arm 7. The first rotor 2 is configured to be rotated unitarily with the crank arm 7.

As shown in FIGS. 1 to 3, the first rotor 2 includes a hub portion 22, an outer flanged portion 23 (exemplary flanged portion), and an inner flanged portion 24. The hub portion 22 is made in the shape of a cylinder extending in the axial direction. In a condition that the power transmission device 100 has been installed in the bicycle, a crankshaft (omitted in illustration) extends inside the hub portion 22.

The outer flanged portion 23 extends radially outward from the hub portion 22. The outer flanged portion 23 is provided with the accommodation holes 21. The accommodation holes 21 penetrate the outer flanged portion 23 in the axial direction. The outer flanged portion 23 is provided on an axially middle part of the hub portion 22.

The inner flanged portion 24 extends radially inward from the hub portion 22. The inner flanged portion 24 includes a spline hole 241 on the inner peripheral surface thereof. The inner flanged portion 24 is provided on one of the axial ends of the hub portion 22. Specifically, the inner flanged portion 24 is provided on the axially second-side end of the hub portion 22. The inner flanged portion 24 is disposed in a different axial position from the outer flanged portion 23. In other words, the inner flanged portion 24 does not overlap with the outer flanged portion 23 as seen in the radial direction.

The first rotor 2 includes a plurality of stopper surfaces 25. When described in detail, the first rotor 2 includes a plurality of cutout portions 26. The cutout portions 26 are disposed at intervals in the circumferential direction. Each cutout portion 26 is disposed between each pair of accommodation holes 21 in the circumferential direction. Each cutout portion 26 opens radially outward. Among the inner wall surfaces by which each cutout portion 26 is defined, the one oriented in the rotational direction R serves as each stopper surface 25.

Each stopper surface 25 is oriented in the circumferential direction. When described in detail, each stopper surface 25 is oriented in the rotational direction R. Each stopper surface 25 is opposed to each stopper portion 51 at an interval in the circumferential direction.

The first rotor 2 can be made of, for instance, iron, stainless steel, carbon fiber reinforced plastics (CFRP), or so forth.

### <Second Rotor>

The second rotor 3 is disposed to be rotatable in the rotational direction R. The second rotor 3 is disposed to be rotatable relative to the first rotor 2. The second rotor 3 includes a first plate 31 and the second plate 32. The first and second plates 31 and 32 are configured to be rotated unitarily with each other. The first and second plates 31 and 32 are disposed to be rotatable relative to the outer flanged portion 23.

The first and second plates 31 and 32 are disposed away from each other at an interval in the axial direction. The first rotor 2 is disposed between the first and second plates 31 and 32. In other words, the first and second plates 31 and 32 are disposed to interpose the first rotor 2 therebetween in the axial direction. When described in detail, the outer flanged portion 23 of the first rotor 2 is disposed axially between the first and second plates 31 and 32. The first plate 31 is disposed on the first side of the outer flanged portion 23 in the axial direction. The second plate 32 is disposed on the second side of the outer flanged portion 23 in the axial direction.

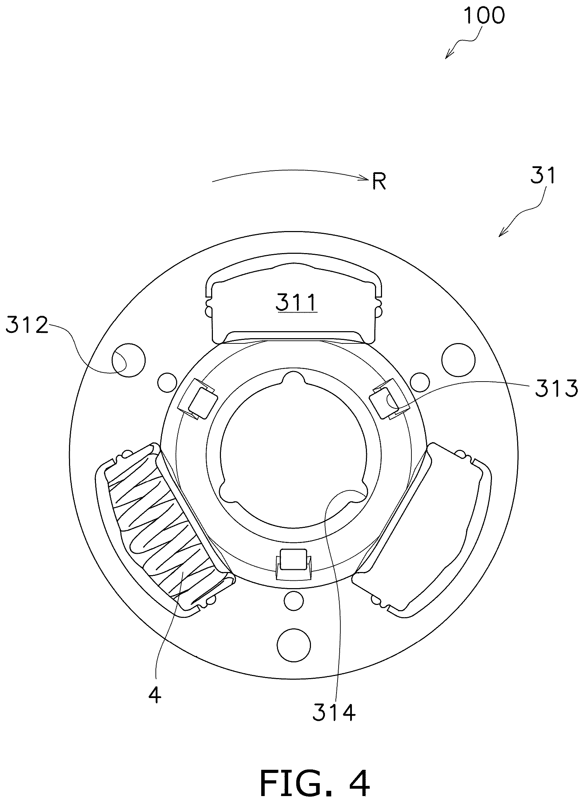

FIG. 4 is a plan view of the first plate 31. As shown in FIG. 4, the first plate 31 has a disc shape and includes an opening in a middle part thereof. The hub portion 22 of the first rotor 2 extends inside the opening of the first plate 31 in the axial direction.

The first plate 31 includes a plurality of first window portions 311. In the present preferred embodiment, the first plate 31 includes three first window portions 311. The first window portions 311 penetrate the first plate 31 in the axial direction. The first window portions 311 are disposed away from each other at intervals in the circumferential direction.

The first plate 31 includes a plurality of first through holes 312. The first through holes 312 are disposed away from each other at intervals in the circumferential direction. The first window portions 311 and the first through holes 312 are alternately disposed in the circumferential direction.

The first plate 31 includes a plurality of engaging holes 313 and a plurality of engaging recesses 314. The engaging holes 313 are through holes penetrating the first plate 31 in the axial direction. Each engaging hole 313 has a rectangular shape as seen in the axial direction. The engaging holes 313 are disposed at intervals in the circumferential direction. Each engaging hole 313 is disposed circumferentially between each pair of first window portions 311 adjacent to each other. As seen in the radial direction, the engaging holes 313 and the first window portions 311 do not overlap with each other, respectively.

The engaging recesses 314 are provided on the inner peripheral surface of the first plate 31. The engaging recesses 314 recess radially outward from the inner peripheral surface of the first plate 31. As seen in the axial direction, each engaging recess 314 has a semicircular shape. The engaging recesses 314 are disposed at intervals in the circumferential direction. As seen in the radial direction, the engaging recesses 314 overlap with the first window portions 311, respectively.

The engaging holes 313 and the engaging recesses 314 are alternately disposed in the circumferential direction. The engaging recesses 314 are disposed radially inside the engaging holes 313.

As shown in FIG. 1, the second plate 32 has a disc shape and includes an opening in a middle part thereof. The hub portion 22 of the first rotor 2 extends inside the opening of the second plate 32 in the axial direction. The second plate 32 is configured to be rotated unitarily with the first plate 31. When described in detail, the first and second plates 31 and 32 are fastened to each other by the plural stopper members 5.

The second plate 32 includes a plurality of second window portions 321. In the present preferred embodiment, the second plate 32 includes three second window portions 321. The second window portions 321 penetrate the second plate 32 in the axial direction. The second window portions 321 are disposed away from each other at intervals in the circumferential direction. As seen in the axial direction, the second window portions 321 overlap with the first window portions 311 on a one-to-one correspondence.

The second plate 32 includes a plurality of second through holes 322. The second through holes 322 are disposed away from each other at intervals in the circumferential direction. The second window portions 321 and the second through holes 322 are alternately disposed in the circumferential direction. As seen in the axial direction, the second through holes 322 overlap with the first through holes 312 on a one-to-one correspondence.

The first and second plates 31 and 32 can be made of, for instance, iron, stainless steel, carbon fiber reinforced plastics (CFRP), or so forth.

### <Coil Springs>

The coil springs 4 are accommodated in the accommodation holes 21, the first window portions 311, and the second window portions 321, respectively. The coil springs 4 elastically couple the first rotor 2 and both the first and second plates 31 and 32 therethrough to each other in the rotational direction R. In other words, the torque, outputted from the first rotor 2, is transmitted to the first and second plates 31 and 32 through the coil springs 4. Besides, the coil springs 4 are rotated together with the first rotor 2, the first plate 31, and the second plate 32. When the torque is transmitted, the coil springs 4 are compressed, whereby torsion (relative rotation) is caused between the first rotor 2 and the second rotor 3. When the coil springs 4 are not being compressed, the torsion is not caused between the first rotor 2 and the second rotor 3; hence, the angle of torsion is 0 degrees.

### <First and Second Friction Members>

The first friction member 8 is disposed axially between the first rotor 2 and the second rotor 3. When described in detail, the first friction member 8 is disposed axially between the outer flanged portion 23 and the first plate 31. The first friction member 8 is disposed to be rotatable relative to the first rotor 2. When the first friction member 8 and the first rotor 2 are rotated relative to each other, a friction torque is generated therebetween. The first friction member 8 is rotated unitarily with the second rotor 3.

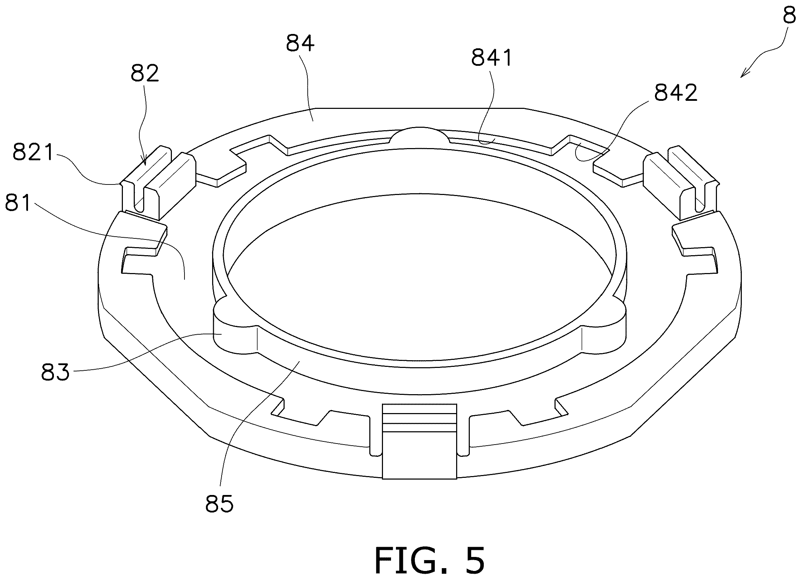

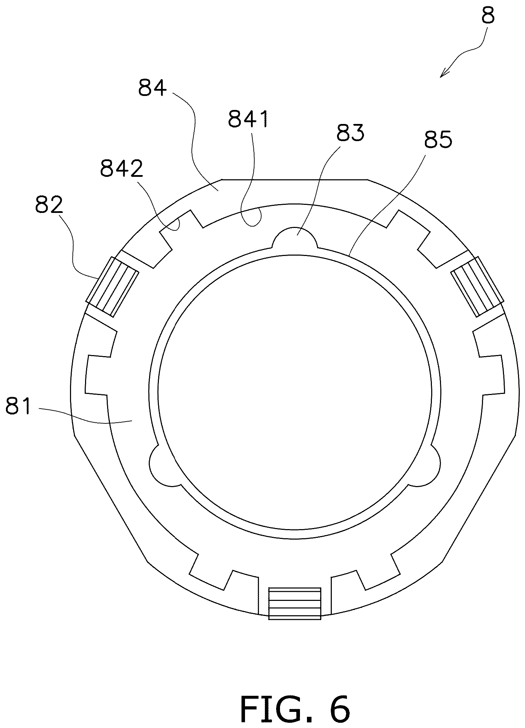

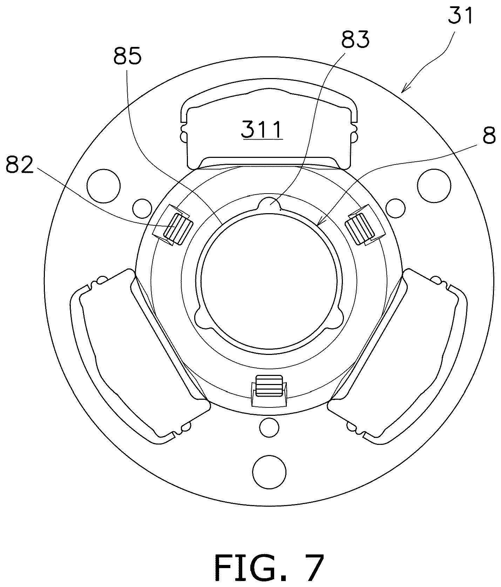

FIG. 5 is a perspective view of the first friction member 8; FIG. 6 is a front view of the first friction member 8 seen from the first side in the axial direction; FIG. 7 is a front view of the first friction member 8 attached to the first plate 31. As shown in FIGS. 5 to 7, the first friction member 8 includes a base portion 81, a plurality of pawl portions 82, a plurality of protruding portions 83, a plurality of outer wall portions 84, and a cylindrical portion 85.

The base portion 81 is made in the shape of an annulus extending in the circumferential direction. The base portion 81 is in contact with the outer flanged portion 23 of the first rotor 2. When described in detail, the base portion 81 is in contact, at a surface thereof oriented to the second side in the axial direction, with the outer flanged portion 23 of the first rotor 2. Because of this, when the first friction member 8 is rotated relative to the first rotor 2, a friction torque is generated between the base portion 81 and the outer flanged portion 23.

The pawl portions 82 extend from the base portion 81 to the first side in the axial direction. The pawl portions 82 are configured to be engaged with the engaging holes 313 on a one-to-one correspondence. Each pawl portion 82 has a rectangular shape as seen in the axial direction. The pawl portions 82 penetrate the engaging holes 313, respectively, to extend across the first plate 31 to the first side of the first plate 31 in the axial direction. Each pawl portion 82 includes a retaining portion 821 on the distal end thereof. The retaining portion 821 protrudes radially outward. The retaining portion 821 interferes with the first plate 31, whereby the first friction member 8 can be prevented from being detached and dropping from the first plate 31 in assemblage. The pawl portions 82 are disposed away from each other at intervals in the circumferential direction.

The protruding portions 83 protrude from the base portion 81 to the first side in the axial direction. The protruding portions 83 are engaged with the engaging recesses 314 on a one-to-one correspondence. It should be noted that the circumferential gap between each protruding portion 83 and the engaging recess 314 corresponding thereto is smaller in magnitude than that between each pawl portions 82 and the engaging hole 313 corresponding thereto.

Each protruding portion 83 has a semicircular shape as seen in the axial direction. Each protruding portion 83 has a semi-columnar shape. The protruding portions 83 are disposed radially inside the pawl portions 82. The protruding portions 83 are disposed away from each other at intervals in the circumferential direction. The protruding portions 83 and the pawl portions 82 are alternately disposed in the circumferential direction.

The protruding portions 83 overlap with the coil springs 4 on a one-to-one correspondence as seen in the radial direction. In other words, the protruding portions 83 are disposed radially inside the coil springs 4 on a one-to-one correspondence.

The outer wall portions 84 protrude from the base portion 81 to the first side in the axial direction. Each outer wall portion 84 is disposed circumferentially between each pair of pawl portions 82 adjacent to each other. Each outer wall portion 84 extends in the circumferential direction. Each outer wall portion 84 is disposed away from the pawl portions 82 adjacent thereto at intervals in the circumferential direction. Each outer wall portion 84 is smaller in height than each pawl portion 82. Here, the "height" of each pawl portion 82 and that of each outer wall portion 84 mean the axial dimension of each pawl portion 82 and that of each outer wall portion 84, respectively. Each outer wall portion 84 is in contact at the distal end surface thereof with the first plate 31.

Each outer wall portion 84 includes an inner surface 841 and a plurality of recesses 842. In the present preferred embodiment, each outer wall portion 84 includes a pair of recesses 842. The inner surface 841 of each outer wall portion 84 is oriented radially inward. The recesses 842 are provided on each inner surface 841. The recesses 842 recess therefrom radially outward.

The recesses 842 are provided on both circumferential ends of each outer wall portion 84, respectively. In other words, the recesses 842 are provided in the vicinity of the pawl portions 82 adjacent to each outer wall portion 84, respectively. The distance between each recess 842 and the pawl portion 82 adjacent thereto is smaller in magnitude than that between the recesses 842.

The cylindrical portion 85 protrudes from the inner peripheral end of the base portion 81 to the first side in the axial direction. The cylindrical portion 85 extends inside the opening of the first plate 31 in the axial direction. The outer peripheral surface of the cylindrical portion 85 is in contact with the inner peripheral surface of the first plate 31.

The protruding portions 83 are disposed radially outside the cylindrical portion 85. The protruding portions 83 are integrated with the cylindrical portion 85. The cylindrical portion 85 is equal in height to each protruding portion 83. Here, the "height" of each protruding portion 83 and that of the cylindrical portion 85 mean the axial dimension of each protruding portion 83 and that of the cylindrical portion 85, respectively.

As shown in FIG. 1, the second friction member 9 is disposed axially between the second plate 32 and the outer flanged portion 23. The second friction member 9 is rotated unitarily with the second plate 32, while being rotated relative to the outer flanged portion 23. When the second friction member 9 and the outer flanged portion 23 are rotated relative to each other, a friction torque is generated therebetween.

The second friction member 9 includes a plurality of pawl portions 91. The pawl portions 91 are engaged with the second plate 32, whereby the second friction member 9 is rotated unitarily with the second plate 32.

Each of the first and second friction members 8 and 9 can be made of, for instance, nylon resin, nylon resin containing reinforced fiber (aramid fiber, metallic fiber, etc.), iron, or so forth.

### <Urging Member>

The urging member 13 is disposed axially between the second friction member 9 and the second plate 32. The urging member 13 urges the first friction member 8 and the outer flanged portion 23 such that the first friction member 8 and the outer flanged portion 23 are pressed against each other. Besides, the urging member 13 urges the second friction member 9 and the outer flanged portion 23 such that the second friction member 9 and the outer flanged portion 23 are pressed against each other. The urging member 13 is, for instance, a disc spring.

### <Sprocket>

The sprocket 6 is attached to the first plate 31. The sprocket 6 is attached to the first plate 31 by the stopper members 5, the first nuts 11, and the second nuts 12. The sprocket 6 is rotated unitarily with the first and second plates 31 and 32. The sprocket 6 includes a plurality of teeth on the outer peripheral end thereof. A chain (omitted in illustration) is wrapped around the sprocket 6, whereby the torque is transmitted from the sprocket 6 to the drive wheel (omitted in illustration) through the chain and so forth.

The sprocket 6 includes a plurality of engaging holes 61. The engaging holes 61 are disposed away from each other at intervals in the circumferential direction. As seen in the axial direction, the engaging holes 61 overlap with not only the first through holes 312 but also the second through holes 322 on a one-to-one correspondence.

### <Stopper Members>

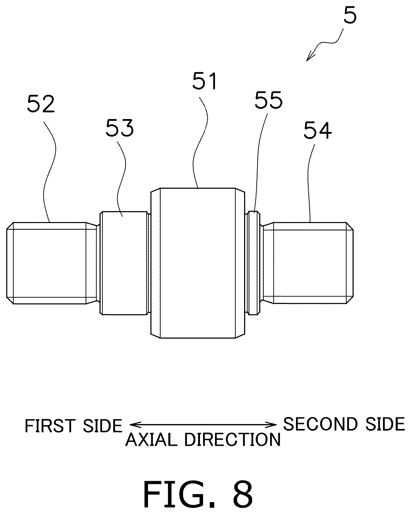

FIG. 8 is a side view of each stopper member 5. As shown in FIGS. 1 and 8, the stopper members 5 fasten the first and second plates 31 and 32 therethrough to each other in cooperation with the first nuts 11 and the second nuts 12 such that the first and second plates 31 and 32 are made detachable from each other. Besides, the sprocket 6 is fastened to the first plate 31 by the stopper members 5 and the first nuts 11. The stopper members 5 are attached to the second rotor 3. The stopper members 5 are configured to be rotated unitarily with the second rotor 3.

Each stopper member 5 includes the stopper portion 51, a first screw portion 52, a first intermediate portion 53, a second screw portion 54, and a second intermediate portion 55. The stopper portion 51, the first screw portion 52, the first intermediate portion 53, the second screw portion 54, and the second intermediate portion 55 are integrated with each other. When described in detail, the stopper portion 51, the first screw portion 52, the first intermediate portion 53, the second screw portion 54, and the second intermediate portion 55 are integrated as a single member. Each stopper member 5 is solid and the interior thereof is not hollowed out.

The stopper portion 51 has a columnar shape. The stopper portion 51 extends in the axial direction. The stopper portion 51 is opposed to each stopper surface 25 in the circumferential direction. The stopper portion 51 is disposed axially between the first plate 31 and the second plate 32. The stopper portion 51 is sandwiched by the first plate 31 and the second plate 32. The stopper portion 51 is disposed in each cutout portion 26 of the first rotor 2.

The first screw portion 52 is integrated with the stopper portion 51. The first screw portion 52 extends in the axial direction. The first screw portion 52 is provided with threads on the outer peripheral surface thereof. The first screw portion 52 is smaller in outer diameter than the stopper portion 51.

The first screw portion 52 is disposed on the first side of the stopper portion 51 in the axial direction. The first screw portion 52 is disposed on the first side of the first plate 31 in the axial direction. Besides, the first screw portion 52 is disposed on the first side of the sprocket 6 in the axial direction.

The first intermediate portion 53 is disposed axially between the stopper portion 51 and the first screw portion 52. Specifically, the first intermediate portion 53 extends from the stopper portion 51 to the first side in the axial direction. Besides, the first screw portion 52 extends from the first intermediate portion 53 to the first side in the axial direction.

The first intermediate portion 53 has a columnar shape. The first intermediate portion 53 extends in the axial direction. The length of the first intermediate portion 53 is smaller in magnitude than the total thickness of the first plate 31 and the sprocket 6. Besides, the length of the first intermediate portion 53 is larger in magnitude than the thickness of the first plate 31. It should be noted that the length of each portion in each stopper member 5 means the axial dimension thereof.

The first intermediate portion 53 is smaller in outer diameter than the stopper portion 51 but is larger in outer diameter than the first screw portion 52. The first intermediate portion 53 is disposed inside each first through hole 312 and each engaging hole 61. The first intermediate portion 53 does not protrude from inside each first through hole 312 and each engaging hole 61 to the first side in the axial direction.

The second screw portion 54 is integrated with the stopper portion 51. The second screw portion 54 extends in the axial direction. The second screw portion 54 is provided with threads on the outer peripheral surface thereof. The second screw portion 54 is smaller in outer diameter than the stopper portion 51. The second screw portion 54 is approximately equal in outer diameter to the first screw portion 52.

The second screw portion 54 is disposed on the second side of the stopper portion 51 in the axial direction. The second screw portion 54 is disposed on the second side of the second plate 32 in the axial direction.

The second intermediate portion 55 is disposed axially between the stopper portion 51 and the second screw portion 54. Specifically, the second intermediate portion 55 extends from the stopper portion 51 to the second side in the axial direction. Besides, the second screw portion 54 extends from the second intermediate portion 55 to the second side in the axial direction.

The second intermediate portion 55 has a columnar shape. The second intermediate portion 55 extends in the axial direction. The second intermediate portion 55 is smaller in length than the first intermediate portion 53. The length of the second intermediate portion 55 is smaller in magnitude than the thickness of the second plate 32.

The second intermediate portion 55 is smaller in outer diameter than the stopper portion 51 but is larger in outer diameter than the second screw portion 54. The second intermediate portion 55 is approximately equal in outer diameter to the first intermediate portion 53. The second intermediate portion 55 is disposed inside each second through hole 322. The second intermediate portion 55 does not protrude from inside each second through hole 322 to the second side in the axial direction.

### <First and Second Nuts>

Each first nut 11 is screwed onto the first screw portion 52. In cooperation with the stopper portion 51, each first nut 11 interposes and holes the sprocket 6 and the first plate 31 therebetween. Each first nut 11 is a flanged nut.

Each second nut 12 is screwed onto the second screw portion 54. In cooperation with the stopper portion 51, each second nut 12 interposes and holds the second plate 32 therebetween. Each second nut 12 is a flanged nut.

### <Crank Arm>

The crank arm 7 is configured to be rotated unitarily with the first rotor 2. In other words, the crank arm 7 is disposed to be rotatable about the rotational axis O. The crank arm 7 is attached to the inner flanged portion 24 of the first rotor 2. When described in detail, the crank arm 7 is configured to be spline-coupled to the inner flanged portion 24.

The crank arm 7 includes an arm body 71 and an attachment portion 72. The arm body 71 extends in the radial direction. The attachment portion 72 extends from one of both ends of the arm body 71 in the axial direction. It should be noted that the pedal (omitted in illustration) is attached to the other of both ends of the arm body 71.

The attachment portion 72 is smaller in outer diameter at a distal end 721 thereof than at the remaining part thereof. The distal end 721 is spline-coupled to the inner flanged portion 24. Besides, the distal end 721 penetrates the inner flanged portion 24 in the axial direction. Then, the distal end 721 is fixed to the inner flanged portion 24 by swaging. When described in detail, the distal end 721 and the inner flanged portion 24 are firmly attached to each other by swaging of the distal end 721. Besides, a part of the distal end 721, protruding from the inner flanged portion 24 to the first side in the axial direction, is enlarged in outer diameter by swaging; namely, the outer diameter of the protruding part is made larger in magnitude than the inner diameter of the inner flanged portion 24. As a result, the distal end 721 is prevented from coming off from the inner flanged portion 24; hence, the crank arm 7 and the first rotor 2 can be prevented from moving away from each other to the opposite sides in the axial direction.

The attachment portion 72 includes an attachment hole 722. The attachment hole 722 has a rectangular shape as seen in the axial direction. The crankshaft (omitted in illustration) is fitted to the attachment hole 722, whereby the crank arm 7 is rotated unitarily with the crankshaft.

### <Action>

The action of the power transmission device 100 configured as described above will be explained. First, when a torque is inputted to the first rotor 2 through the crank arm 7 by pedaling of a user, the first rotor 2 is rotated in the rotational direction R. Then, the torque is transmitted from the first rotor 2 to the second rotor 3 through the coil springs 4. As a result, the second rotor 3 is rotated in the rotational direction R, whereby the torque is transmitted to the drive wheel.

Here, when the angle of torsion between the first rotor 2 and the second rotor 3 reaches a predetermined angle by compression of the coil springs 4, the stopper surfaces 25 are contacted with the stopper portions 51, respectively. Thus, when the stopper portions 51 are contacted by the stopper surfaces 25, respectively, the first rotor 2 is restricted from rotating relative to the second rotor 3 any further from the position. In other words, the first rotor 2 is rotated relative to the second rotor 3 until the stopper members 5 are contacted by the stopper surfaces 25, respectively. Then, the first rotor 2 is rotated unitarily with the second rotor 3 after the stopper portions 51 are contacted by the stopper surfaces 25, respectively. The angle of torsion between the first rotor 2 and the second rotor 3 is maximized (hereinafter referred to as "maximum angle of torsion") when the stopper surfaces 25 are contacted with the stopper portions 51, respectively. It should be also noted that the angle of torsion between the first rotor 2 and the second rotor 3 is 0 degrees when the torque has not been inputted to the power transmission device 100.

### [Modifications]

One preferred embodiment of the present invention has been explained above. However, the present invention is not limited to the above, and a variety of changes can be made without departing from the gist of the present invention. It should be noted that basically speaking, respective modifications to be described are applicable simultaneously.
(a) In the preferred embodiment described above, the sprocket 6 is attached to the first plate 31; alternatively, the sprocket 6 may be attached to the second plate 32. In this case, the crank arm 7 is attached to the axially first-side end of the hub portion 22.
(b) In the preferred embodiment described above, the urging member 13 is disposed between the second friction member 9 and the second plate 32; alternatively, the urging member 13 may be disposed between the first friction member 8 and the first plate 31.
(c) In the preferred embodiment described above, the protruding portions 83 and the pawl portions 82 are alternately disposed in the circumferential direction; however, the first friction member 8 is not limited in configuration to this. For example, as seen in the radial direction, the protruding portions 83 may overlap with the pawl portions 82 on a one-to-one correspondence.
(d) In the preferred embodiment described above, the power transmission device 100 includes the first and second friction members 8 and 9; however, the power transmission device 100 is not limited in configuration to this. For example, the power transmission device 100 may include only the first friction member 8 without including the second friction member 9.

### LIST OF REFERENCE NUMERALS

2 First rotor
22 Hub portion
23 Outer flanged portion
3 Second rotor
31 First plate
313 Engaging hole
314 Engaging recess
32 Second plate
4 Coil spring
6 Sprocket
8 First friction member
81 Base portion
82 Pawl portion
83 Protruding portion
84 Outer wall portion
841 Inner surface
842 Recess
85 Cylindrical portion
100 Bicycle power transmission device

## Claims

1. A bicycle power transmission device comprising:
a first rotor;
a second rotor disposed to be rotatable relative to the first rotor;
a friction member disposed between the first rotor and the second rotor, the friction member disposed to be rotatable relative to the first rotor, the friction member configured to be rotated unitarily with the second rotor; and
an elastic member elastically coupling the first rotor and the second rotor therethrough to each other, wherein
the friction member includes
a base portion having an annular shape,
a pawl portion extending from the base portion to a first side in an axial direction, and
a protruding portion disposed radially inside the pawl portion, the protruding portion protruding from the base portion to the first side in the axial direction, and
the second rotor includes
an engaging hole causing the pawl portion to be engaged therewith, and
an engaging recess causing the protruding portion to be engaged therewith.

2. The bicycle power transmission device according to claim 1, wherein
the friction member includes
a plurality of the pawl portions, and
a plurality of the protruding portions, and
the plurality of pawl portions and the plurality of protruding portions are alternately disposed in a circumferential direction.

3. The bicycle power transmission device according to claim 1, wherein the protruding portion overlaps with the elastic member as seen in a radial direction.

4. The bicycle power transmission device according to claim 1, wherein
the friction member includes
a plurality of the pawl portions, the plurality of pawl portions disposed away from each other at intervals in a circumferential direction, and
an outer wall portion protruding from the base portion to the first side in the axial direction, the outer wall portion disposed circumferentially between a pair of pawl portions adjacent to each other in the plurality of pawl portions, the outer wall portion extending in the circumferential direction, and
the outer wall portion includes
an inner surface oriented radially inward, and
a recess provided on the inner surface, the recess recessing radially outward.

5. The bicycle power transmission device according to claim 1, wherein
the friction member includes
a plurality of the pawl portions, the plurality of pawl portions disposed away from each other at intervals in a circumferential direction, and
an outer wall portion protruding from the base portion to the first side in the axial direction, the outer wall portion disposed circumferentially between a pair of pawl portions adjacent to each other in the plurality of pawl portions, the outer wall portion extending in the circumferential direction, and
the outer wall portion is disposed away from the pair of pawl portions at intervals in the circumferential direction.

6. The bicycle power transmission device according to claim 1, wherein
the first rotor includes
a hub portion extending in the axial direction, and
a flange portion extending radially outward from the hub portion,
the second rotor includes
a first plate disposed on the first side of the flange portion in the axial direction, and
a second plate disposed on a second side of the flange portion in the axial direction, the second plate configured to be rotated unitarily with the first plate, the friction member is disposed axially between the flange portion and the first plate, and
the first plate includes the engaging hole and the engaging recess.

7. The bicycle power transmission device according to claim 6, further comprising:
a sprocket attached to the first plate.

8. The bicycle power transmission device according to claim 1, wherein
the friction member includes a cylindrical portion protruding from an inner peripheral end of the base portion to the first side in the axial direction, and
the protruding portion is disposed radially outside the cylindrical portion, the protruding portion integrated with the cylindrical portion.
